Europäisches Patentamt

European Patent Office

Office européen des brevets

(19)

(11) Veröffentlichungsnummer : **0 027 992**
**B1**

(12) **EUROPÄISCHE PATENTSCHRIFT**

(45) Veröffentlichungstag der Patentschrift :
13.07.83

(51) Int. Cl.³ : **C 09 C   1/16, C 01 G  21/14**

(21) Anmeldenummer : 80106400.7

(22) Anmeldetag : 21.10.80

(54) **Thermostabiles Bleiweiss, Verfahren zu seiner Herstellung sowie damit pigmentierte Artikel aus thermoplastischen und elastischen Polymeren.**

(30) Priorität : 27.10.79 DE 2943454

(43) Veröffentlichungstag der Anmeldung :
06.05.81 Patentblatt 81/18

(45) Bekanntmachung des Hinweises auf die Patenterteilung : 13.07.83 Patentblatt 83/28

(84) Benannte Vertragsstaaten :
**AT BE CH DE FR GB IT LI NL SE**

(56) Entgegenhaltungen :
DE C 263 471
FR A 520 201
GB A 8 547
GB A 273 287

Die Akte enthält technische Angaben, die nach dem Eingang der Anmeldung eingereicht wurden und die nicht in dieser Patentschrift enthalten sind.

(73) Patentinhaber : **HOECHST AKTIENGESELLSCHAFT**
**Postfach 80 03 20**
**D-6230 Frankfurt/Main 80 (DE)**
**Ewald Dörken AG**
**Postfach 163**
**D-5804 Herdecke/Ruhr (DE)**
**Lindgens & Söhne GmbH & Co.**
**Postfach 80 06 49**
**D-5000 Köln 80 (DE)**

(72) Erfinder : **Jablonka, Dieter**
**Neue Strasse 11**
**D-5804 Herdecke (DE)**
Erfinder : **Urban, Klaus**
**Beethovenweg 8**
**D-5804 Herdecke (DE)**
Erfinder : **Klotz, Günther, Dr.**
**Voiswinkeler Strasse 63**
**D-5060 Bergisch Gladbach (DE)**
Erfinder : **Kunz, Wilhelm**
**Guilleaumestrasse 15**
**D-5000 Köln 80 (DE)**
Erfinder : **Nagel, Rolf**
**Südstrasse 10**
**D-5204 Lohmar (DE)**
Erfinder : **Roos, Gerhard**
**Münsterer Strasse 6**
**D-6239 Kriftel (DE)**
Erfinder : **Lenz, Hans-Joachim**
**Jahnstrasse 18**
**D-6238 Hofheim am Taunus (DE)**

(74) Vertreter : **Meyer-Dulheuer, Karl-Hermann, Dr. et al**
**HOECHST Aktiengesellschaft**
**Zentrale Patentabteilung**
**Postfach 80 03 20**
**D-6230 Frankfurt/Main 80 (DE).**

EP 0 027 992 B1

Thermostabiles Bleiweiß, Verfahren zu seiner Herstellung sowie damit pigmentierte Artikel aus thermoplastischen und elastischen Polymeren

Die Erfindung betrifft Tarnmaterialien, welche die gleiche Emissionscharakteristik haben sollen wie frisch gefallener oder alternder Schnee. Während mit üblichen Weißpigmenten, wie Titandioxid, Zinksulfid, Kreide, Bariumsulfat und deren Mischungen pigmentierte Flächengebilde zwar eine Tarnung gegen visuelle Sicht bewirken können, versagen diese Pigmente bei Anwendung von Sichtgeräten und Filmmaterialien geänderter Empfindlichkeit, da in diesem Fall eine von Schnee abweichende Emissionscharakteristik in Erscheinung tritt. Weiße Bleipigmente, wie Bleiphosphat und Bleicarbonat, zeigen zwar in dieser Beziehung ein wesentlich günstigeres Verhalten, das sich jedoch durch Alterung und insbesondere thermische Beanspruchung ändert. Diese Pigmente sind somit nicht geeignet, in thermoplastischen Materialien beispielsweise zu Folien verarbeitet zu werden.

Gegenstand der Erfindung ist ein Bleiweiß, das die genannten Nachteile nicht zeigt, und sich deshalb hervorragend zur Pigmentierung von Tarnmaterialien eignet. Dieses Bleiweiß ist dadurch gekennzeichnet, daß es praktisch frei ist von Bleioxid, im UV-Bereich bei 300 bis 800 nm, mindestens 60, vorzugsweise mindestens 70 % Remission zeigt und bis 300 °C thermostabil ist.

Der Ausdruck « praktisch frei » soll besagen, daß der Gehalt an Bleioxid unter der Nachweisgrenze liegt (Weißgrad, Hohlkegelmethode).

Gegenstand der Erfindung ist weiterhin ein Verfahren zur Herstellung dieser neuen Bleiweißform, das dadurch gekennzeichnet ist, daß man hochreines Blei(II)oxid in Essigsäure löst, das Bleiweiß mit Kohlendioxid bei Temperaturen zwischen 10 und 40 °C ausfällt, abtrennt und schonend trocknet.

Gegenstand der Erfindung sind weiterhin Artikel aus thermoplastischen und elastischen Polymeren, die mit dem thermostabilen Bleiweiß pigmentiert sind, insbesondere Folien und andere Flächengebilde, die als Tarnmaterialien dienen.

Im folgenden werden bevorzugte Ausgestaltungen der Erfindung näher erläutert.

Thermostabiles Bleiweiß mit besonders hohem Weißgrad und einer hohen Remission im genannten Bereich, insbesondere um 330 nm, wird erhalten, wenn man hochreines Blei(II)oxid in wäßriger Essigsäure bei Zimmertemperatur löst und aus dieser Lösung innerhalb von 1 bis 3 Stunden das Bleiweiß unter einem geringen Kohlendioxid-Überdruck ausfällt. Man kann auch das Blei(II)oxid in Wasser suspendieren, Eisessig zusetzen und diese Suspension mit Kohlendioxid unter leichtem Überdruck behandeln. Nachdem sich ein pH-Wert von 7 eingestellt hat, wird die Einleitung von Kohlendioxid beendet. Es kann vorteilhaft sein, die entstandene Suspension mit schwefliger Säure nachzubehandeln. Das Produkt wird dann abgetrennt und schonend getrocknet.

Die als Ausgangsmaterial eingesetzte « Bleiglätte » soll kein Restblei (vorzugsweise unter 50 ppm), keine Mennige und keine Bleiglätte in der roten Modifikation enthalten.

Vorzugsweise erfolgt die Ausfällung innerhalb von 2 Stunden bei Zimmertemperatur, wobei ein Kohlendioxid-Überdruck von etwa 0,5 bar eingehalten wird.

Unter « schonendem » Trocknen wird verstanden, durch Auswahl von Trockentemperaturen und -zeiten Vorkehrungen zu treffen, daß eine Zersetzung des Produkts vermieden wird. Bevorzugte Trockentemperaturen liegen im Bereich von 80 bis 150 °C, insbesondere 100 bis 120 °C.

Die Einarbeitung des Bleiweißpigments in thermoplastische und elastische Polymere erfordert, daß das Pigment in eine für den jeweiligen Anwendungszweck geeignete Zubereitung überführt wird. Es ist hierbei darauf zu achten, daß während des Dispergiervorganges keine störenden Verunreinigungen, insbesondere keine metallischen Verunreinigungen wie Eisenabrieb eingeschleppt werden. Selbstverständlich dürfen nur Hilfsmittel Verwendung finden, die ihrerseits die erforderliche Stabilität und Verträglichkeit mit dem Bleiweiß aufweisen.

Eine für die Einarbeitung in eine Polyäthylenfolie geeignete Zubereitung wird erhalten, wenn man das pulverförmige Pigment mit einer Mischung von Hochdruckpolyäthylen und niedermolekularem Polyäthylen vormischt, die Mischung in einem Extruder plastifiziert und zu Granulat verarbeitet.

Auch eine Einarbeitung in Streichpasten ist möglich, worunter lösemittelfreie homogene thermoplastische Materialien mit einem relativ hohen Weichmachergehalt (sogenannte Plastisole) verstanden werden sollen. Der zugrundeliegende Thermoplast ist vorzugsweise ein Polymerisat auf Basis Vinylchlorid oder Polyurethan bzw. eine Vorstufe eines Polyurethans. Diese Streichpasten werden nach bekannten Methoden auf Trägermaterialien, vorzugsweise Fasermaterialien oder Folien, aufgebracht und sodann fertiggestellt.

Besonders bevorzugte Tarnmaterialien stellen Folien, insbesondere Verbundfolien, aus thermoplastischen und elastischen Polymeren dar, in die das thermostabile Bleiweiß eingearbeitet wird. Foliendicke und Pigmentierungsgrad werden hierbei so aufeinander abgestimmt, daß eine vollständige Deckung erzielt wird. In der Praxis wählt man Foliendicken von mindestens 100 $\mu$m, vorzugsweise jedoch 150 bis 250 $\mu$m. Dementsprechend bewegt sich der Pigmentgehalt in relativ weiten Grenzen von etwa 5 bis etwa 80 Gew.-%. Ein solches erfindungsgemäßes Tarnmaterial weist bei Immision elektromagnetischer Strahlung im Bereich von 300 nm eine Reflektion von 70 % der immitierten Strahlung auf. Bei längerwelliger elektromagnetischer Strahlung, etwa bis 900 nm, steigt der Remissionsgrad auf ca. 90 % an, um dann bei längeren Wellen, so wie dies auch bei Schnee der Fall ist, im Remissionsgrad wieder bis auf ca. 60 bis 70 % zurückzufallen.

Die genannten physikalischen Eigenschaften des Tarnmaterials ändern sich auch nach längerer Beanspruch im Freien nicht. Das gleiche gilt auch für andere Flächengebilde, auf die das erfindungsgemäße Pigment nach einer Streich oder Spritzmethode in geeigneter Weise aufgebracht wurde.

Zur Erhöhung der mechanischen Stabilität des Tarnmaterials kann das pigmentierte Flächengebilde durch einen Träger stabilisiert werden. Dieser Träger kann ein Textilmaterial, ein Drahtnetz oder eine andere Folie, vorzugsweise eine Gitterfolie sein.

In den folgenden Beispielen wird die Erfindung näher erläutert.

A. Herstellung des thermostabilen Bleiweiß

Beispiel 1

2 kg Bleiglätte werden in 40 %iger Essigsäure bei Zimmertemperatur gelöst. Anschließend wird aus dieser Lösung Bleiweiß unter einem Überdruck von 0,5 bar mit Kohlendioxid gefällt. Nachdem sich ein pH-Wert von 7 eingestellt hat, wird die Suspension dekantiert und Mutterlauge und Produktschlamm getrennt, worauf das Bleiweiß bei 105 °C getrocknet wird. Es werden 2,3 kg Bleiweiß mit einem Remissionswert im UV-Licht (Wellenlänge 330 nm) von 84 % erhalten.

Beispiel 2

2 kg Bleiglätte werden in 9 l Wasser suspendiert. Nach der Zugabe von 6 ml 100 %iger Essigsäure wird die Suspension mit Kohlendioxid unter einem Überdruck von 0,5 bar behandelt. Nachdem sich ein pH-Wert von 7 eingestellt hat, wird die Zuführung von Kohlendioxid beendet und die entstandene Suspension mit 20 ml schwefeliger Säure nachbehandelt. Das Produkt wird dekantiert und bei 105 °C getrocknet. Es werden 2,3 kg Bleiweiß mit einem Remissionswert im UV-Licht (Wellenlänge 330 nm) von 74 % erhalten.

B. Herstellung einer Pigmentpräparation

Beispiel 3

700 g Bleiweiß nach Beispiel 1 werden mit 200 g Hochdruckpolyäthylen (Dichtebereich 1, Schmelzindexbereich 3 nach DIN 7740) und 100 g niedermolekulares Polyäthylen (Polyäthylenwachs, Dichte 0,931, Schmelzviskosität bei 140 °C 800 mPas, Tropfpunkt 120 °C) auf einem Schnellmischer 5 Minuten bei 1 400 U/min vorgemischt. Die Mischung wird dann auf einem gegenläufig arbeitenden Doppelschneckenextruder mit Mischelementen plastifiziert (34 mm Schneckendurchmesser, 408 mm Schneckenlänge, Temperatur in der Einzugszone 130 °C, in der Plastifizierungszone 135 bis 140 °C und im Düsenraum 140 °C). Der Strang wird mit Wasser und Luft gekühlt und zu Zylindergranulaten von 2,5 mm Durchmesser und 3 mm Länge geschnitten.

C. Herstellung einer pigmentierten Folie

Beispiel 4

25 Gew.-Teile Pigmentpräparation gemäß Beispiel 3 werden mit 75 Gew.-Teilen Hochdruckpolyäthylen vorgemischt und in einem Einschneckenextruder mit verchromter Schnecke, verchromtem Zylinder und verchromter Flachdüse in bekannter Weise zu einer 200 μm starken Folie verarbeitet.

**Ansprüche**

1. Bleiweiß, dadurch gekennzeichnet, daß es praktisch frei ist von Bleioxid, im UV-Bereich bei 300 bis 800 nm mindestens 60 % Remission zeigt und bis 300 °C thermostabil ist.

2. Bleiweiß nach Anspruch 1, dadurch gekennzeichnet, daß die Remission im genannten Bereich mindestens 70 % beträgt.

3. Verfahren zur Herstellung des Bleiweißes nach Anspruch 1 durch Umsetzung einer Bleiacetatlösung mit Kohlendioxid, Abtrennung und Trocknung des Niederschlags, dadurch gekennzeichnet, daß man die Bleiacetatlösung aus hochreinem Blei(II)oxid durch Lösen in Essigsäure herstellt, die Fällung mit Kohlendioxid bei Temperaturen zwischen 10 und 40 °C durchführt und den Niederschlag nach dem Abtrennen schonend trocknet.

4. Verfahren nach Anspruch 3, dadurch gekennzeichnet, daß man das Blei(II)oxid in wäßriger Essigsäure bei Zimmertemperatur löst, bei Zimmertemperatur Kohlendioxid unter einem Überdruck bis etwa 0,5 bar einleitet, bis sich ein pH-Wert von 7 einstellt, das Bleiweiß abtrennt und bei 80 bis 150 °C trocknet.

5. Verfahren nach Anspruch 4, dadurch gekennzeichnet, daß die Trocknung bei 100 bis 120 °C erfolgt.

6. Artikel aus thermoplastischen und elastischen Polymeren, die mit dem Bleiweiß nach Anspruch 1 pigmentiert sind.

7. Artikel nach Anspruch 6, dadurch gekennzeichnet, daß er aus Polyäthylen besteht.

8. Artikel nach Anspruch 7, dadurch gekennzeichnet, daß er eine Folie ist.

9. Artikel nach Anspruch 8, dadurch gekennzeichnet, daß er 5 bis 80 Gew.-% Bleiweiß enthält.

10. Artikel nach Anspruch 8 und 9, dadurch gekennzeichnet, daß er eine Verbundfolie ist.

**Claims**

1. Basic lead carbonate characterized by being practically free of lead oxide, showing a remission of at least 60 % at 300 to 800 nm and being thermostable up to 300 °C.

2. Basic lead carbonate as claimed in claim 1, characterized by showing a remission of at least 70 % at 300 to 800 nm.

3. Process for preparing the lead carbonate as claimed in claim 1 by reacting a solution of lead acetate with carbondioxide, separating and drying the precipitate, characterized by making the lead acetate solution by dissolving highly pure lead(II)oxide in aqueous acetic acid, carrying out the precipitation with carbon dioxide at temperatures of 10 to 40 °C and drying the precipitate under mild conditions after its separation.

4. Process as claimed in claim 3, which comprises dissolving the lead(II)oxide at about room temperature in aqueous acetic acid, introducing at about room temperature carbon dioxide under an overpressure of up to 0.5 bar until a pH of 7 is reached, removing the precipitate and drying it at 80 to 150 °C.

5. Process as claimed in claim 4, wherein the precipitate is dried at 100 to 120 °C.

6. Articles from thermoplastic and elastic polymers which are pigmented with the basic lead carbonate as claimed in claim 1.

7. Article as claimed in claim 6, characterized by being made of polyethylene.

8. Article as claimed in claim 7, wherein the article is a sheet.

9. Article as claimed in claim 8, characterized by containing 5 to 80 % by weight of basic lead carbonate.

10. Article as claimed in claims 8 and 9, wherein the article is a composite film.

**Revendications**

1. Blanc de plomb caractérisé en ce qu'il est pratiquement exempt d'oxyde de plomb, en ce qu'il présente une réflexion spectrale d'au moins 60 % dans la région UV allant de 300 à 800 nm et en ce qu'il est thermostable jusqu'à 300 °C.

2. Blanc de plomb suivant la revendication 1, caractérisé en ce que la réflexion spectrale dans la région mentionnée est d'au moins 70 %.

3. Procédé de préparation du blanc de plomb suivant la revendication 1, par réaction d'une solution d'acétate de plomb avec du dioxyde de carbone, séparation et séchage du précipité, procédé caractérisé en ce qu'on prépare la solution d'acétate de plomb à partir d'un oxyde de plomb (II) de haute pureté par dissolution dans de l'acide acétique, on effectue la précipitation par du dioxyde de carbone à une température comprise entre 10 et 40 °C et on soumet le précipité, après la séparation, à un séchage ménagé.

4. Procédé suivant la revendication 3, caractérisé en ce qu'on dissout l'oxyde de plomb (II) dans de l'acide acétique aqueux à la température ambiante, on fait passer du dioxyde de carbone à la température ambiante sous une pression allant jusqu'à 0,5 bar environ, jusqu'à ce qu'il s'établisse un pH de 7, on sépare le blanc de plomb et on le sèche à une température de 80 à 150 °C.

5. Procédé suivant la revendication 4, caractérisé en ce que le séchage est effectué à une température de 100 à 120 °C.

6. Articles en polymères thermoplastiques et élastiques, qui sont pigmentés avec le blanc de plomb suivant la revendication 1.

7. Article suivant la revendication 6, caractérisé en ce qu'il est constitué de polyéthylène.

8. Article suivant la revendication 7, caractérisé en ce qu'il est une feuille.

9. Article suivant la revendication 8, caractérisé en ce qu'il contient de 5 à 80 % en poids de blanc de plomb.

10. Article suivant l'une des revendications 8 à 9, caractérisé en ce qu'il est une feuille composite.